# EUROPÄISCHE PATENTSCHRIFT

(11) **EP 1 752 823 B1**
(45) Veröffentlichungstag und Bekanntmachung des Hinweises auf die Patenterteilung: **08.09.2010**
(21) Anmeldenummer: 06013731.2
(22) Anmeldetag: 03.07.2006
(51) Int. Cl.: G03B 17/56

(54) **Kamerastativkopf**
Camera stand head
Tête de trépied d'appareil photographique

(30) Priorität: 10.08.2005 DE 102005037782
(43) Veröffentlichungstag der Anmeldung: 14.02.2007
(73) Patentinhaber: Camera Dynamics GmbH, 85386 Eching (DE)
(72) Erfinder: Hofner, Marco, 81543 München (DE); Soucek, Carl Heinz, 82377 Penzberg (DE)
(74) Vertreter: HOFFMANN EITLE

(56) Entgegenhaltungen:
- JP-A- 5 145 816
- US-A- 4 979 709
- US-A- 5 737 657
- US-B1- 6 196 504

## Beschreibung

### Technisches Gebiet

Die Erfindung bezieht sich auf das technische Gebiet der Kamerastative, auf denen mit erheblichen Anforderungen an die Kameraführung dafür zu sorgen ist, dass der Schwerpunkt der Kamera im richtigen Verhältnis zur Schwenk- und Neigebewegung liegt, damit eine einwandfreie Kameraführung über diverse Neigungs- und Schwenkbereiche möglich ist.

### Stand der Technik

Es ist bekannt, dass auf einem Kamerastativkopf, der üblicherweise eine Dämpfungs- und Gewichtsausgleichmechanik für die diversen Kamerabewegungen enthält, die Kamera mit einer daran befestigten Kameramontageplatte lösbar an einer Verschiebeplatte befestigt ist. Die lösbare Befestigung besteht dabei in Form einer Befestigungseinrichtung, die durch ihre Anbringung die Verschiebung der Verschiebeplatte in einer Richtung begrenzt, wobei diese Verschieberichtung parallel zur optischen Achse der Kamera verläuft. Die Verschiebeplatte ist am Stativkopf zwischen zwei Anschlägen in Verbindung mit mindestens einem Gegenanschlag, der am Stativkopf befestigt ist, verschiebbar in einer Schwalbenschwanzführung geführt. Dabei ist die Verschiebeplatte, die stufenlos verschiebbar ist, innerhalb des gesamten Verschiebungsbereiches stufenlos arretierbar, wobei ausgehend vom Neigezentrum des Stativkopfes Teilverschiebelängenbereiche unterschiedlich lang sind. Dies ergibt sich aus dem Wunsch, die Länge der Verschiebeplatte möglichst kurz zu halten, damit es keine Verstauungsschwierigkeiten des Stativs gibt. Andererseits behindert die vorgenannte Befestigungseinrichtung die Verschiebung in einem Teilbereich, vorzugsweise dem vorderen Teilbereich, der der Optik der Kamera zugewandt ist, damit die größere Verschiebelänge im hinteren Bereich vorgesehen ist, weil üblicherweise durch die schwere Optik der Schwerpunkt der Kamera nach hinten versetzt werden muss, um in das Neigezentrum des Stativkopfes gebracht werden zu können.

Die vorerwähnten Anschläge sind vorgesehen, damit die Verschiebebewegung automatisch begrenzt ist und somit nicht der Umstand vorkommen kann, dass sich die Verschiebeplatte vollständig vom Stativkopf löst und zusammen mit der Kamera herunterfällt.

### Darstellung der Erfindung

Das technische Problem der Erfindung besteht darin, einen Kamerastativkopf der vorerwähnten Art bei Beibehaltung der besonderen Befestigungseinrichtung so zu gestalten, dass in einem erheblichen und wirksamen Umfang die größere Teilverschiebelänge in beide Richtungen der Verschiebung genutzt werden kann und somit die Möglichkeit besteht, bestehende Kamerastativköpfe auf einfache Weise nach, bzw. umzurüsten.

Diese Aufgabe wird erfindungsgemäß dadurch gelöst, dass die Verschiebeplatte vom Stativkopf dadurch ohne Benutzung eines Werkzeuges lösbar und in Richtung der optischen Achse einer aufzubringenden Kamera in umgekehrter Ausrichtung anbringbar ist, dass zumindest einer der Anschläge für die Verschiebebegrenzung als Freianschlag für eine Bewegung aus einer Anschlagstellung in eine Freigabestellung und zurück aus dem Bewegungsweg mit dem Gegenanschlag bringbar ist.

Durch diesen beweglichen Freianschlag besteht auf einfache Weise ohne die Notwendigkeit des Einsatzes eines Werkzeuges durch das Wiederanbringen in umgekehrter Ausrichtung die längere Teilverschiebelänge sowohl in Richtung nach vorne als auch in Richtung nach hinten bezüglich der Kamera wirksam werden zu lassen. Dadurch ist es möglich, bei gleichbleibend kurzer Verschiebeplatte und ohne Veränderung der besonderen Befestigungsmechanik der vorhandenen Technik in optimaler Weise über einen optimal großen Bereich die Schwerpunktverlagerung der Kamera gegenüber der Neigeachse des Stativkopfes vorzunehmen, also nicht nur für solche Kameras, die ihren Schwerpunkt mehr nach vorne sondern auch mehr nach hinten gelagert haben, wenn eine leichtere Optik verwendet wird, aber im hinteren Bereich der Kamera beispielsweise ein elektrischer Akku angebracht ist, der den Schwerpunkt nach hinten verlagert.

Zweckmäßigerweise ist der Freianschlag derjenige Anschlag, der von der die Verschiebung der Verschiebeplatte begrenzenden Befestigungseinrichtung entfernt angeordnet ist. Dabei bildet die Befestigungseinrichtung selbst oder ein diesem vorgelagerter eigener Anschlag die Begrenzung in der einen Richtung und der Freianschlag die Begrenzung in der anderen Richtung, wobei der Freianschlag wegbewegbar und dann an jeder Seite die Verschiebeplatte abgenommen werden kann. Somit bildet die Verschiebeplatte eine Schnittstelle für Anpassungen hinsichtlich einer Schulterauflage, der Anbringung an einem Körperstativ oder anderer Einsatzmöglichkeiten der Kamera unabhängig vom eigentlichen Kamerastativkopf.

Der Freianschlag kann Teil eines handbetätigbaren Hebels oder Teil einer handbetätigbaren Druckstange oder Teil einer handbetätigbaren Zugstange sein. Wenn der Hebel, die Druckstange oder die Zugstange federbeaufschlagt ist, so kann durch diese Feder der Freianschlag in die Anschlagstellung gedrückt werden, wenn keine Betätigung erfolgt. Durch die Betätigung wird gegen die Wirkung der Feder eine Verstellung des Freianschlages in die Freigabestellung vorgenommen. Insbesondere dadurch ist eine schnelle, unkomplizierte und wirksame Abnehmbarkeit der Verschiebeplatte gewährleistet.

Dabei kann die Federkraft und auch der Betätigungsweg so eingestellt werden, dass eine unbeabsichtigte Betätigung erschwert wird. Insbesondere ist dies hinsichtlich des Betätigungsweges gut einzustellen, wenn ein Hebel verwendet wird, bei dem der Abstand zwischen Anschlag als Teil des Hebels und der Hebelachse möglichst groß ist.

Dadurch ist eine erhöhte Sicherheit gewährleistet.

Auch wenn eine Handhabe für den Hebel, die Druckstange und die Zugstange zugänglich aber geschützt an der Verschiebeplatte angebracht ist, wird eine unbeabsichtigte Betätigung erschwert.

Zweckmäßigerweise kann der Freianschlag an die Verschiebeplatte und der Gegenanschlag am Stativkopf angebracht sein, wobei vorzugsweise beide Anschläge an der Verschiebeplatte und ein Gegenschlag am Stativkopf angebracht ist. Dies kann auch umgekehrt der Fall sein.

Vorzugsweise ist der Freianschlag mit einer Anstellfläche versehen, die eine Schrägfläche oder eine Rundung sein kann. Wenn die Verschiebeplatte in die Führung des Stativkopfes eingeschoben wird, so trifft die Anstellfläche auf dem Gegenanschlag und verschiebt gegen die Kraft der Feder den Hebel, die Druckstange und die Zugstange, so dass der Freianschlag automatisch sich bewegt und ohne Betätigung des Hebels, der Druckstange und der Zugstange hinter den Gegenanschlag in die Anschlagstellung sich bewegen kann. Für das Abnehmen der Verschiebeplatte bedarf es einer Betätigung des Hebels, der Druckstange und der Zugstange, um den Freianschlag in die Freigabestellung zu bringen.

Wenn in dieser Anmeldung von einer Verschiebe"platte" und einer Kamera"platte" die Rede ist, so muss es sich nicht exakt um eine Platte handeln. Der Ausdruck umfasst jedes plattenartige Gebilde, auch wenn es nicht überall glatte Oberflächen aufweist. Wenn vom Zentrum des Stativkopfes die Rede ist, so ist das der Ort, in dem sich die Neigeachse und die Schwenkachse schneiden. In erster Linie ist dies der Ort, wo die Neigeachse als solche liegt.

### Kurze Beschreibung der Zeichnungen

Es zeigt:
Fig. 1 eine Seitenansicht eines Kamerastativkopfes mit einer darauf befestigten Kamera;
Fig. 2 eine Unteransicht einer Verschiebeplatte des Kamerastativkopfes;
Fig. 3a eine Schnittansicht entlang der Linie III-III in Fig. 2 für eine Verschiebeextremstellung; und
Fig. 3b eine ähnliche Schnittansicht mit der anderen Verschiebeextremstellung der Verschiebeplatte.

### Beschreibung eines Ausführungsbeispiels der Erfindung

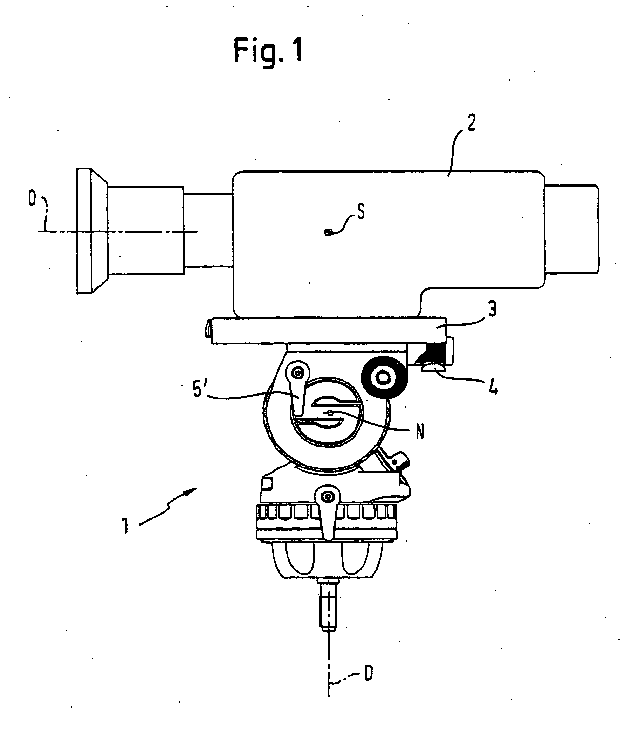

Aus der Darstellung in Fig. 1 ist ein Stativkopf 1 erkennbar mit einer darauf befestigten Kamera 2. An der Unterseite der Kamera befindet sich eine nicht dargestellte Kameraplatte, die in die Außenseite einer Verschiebeplatte 3 eingesetzt und mittels einer Befestigungseinrichtung 4 unverschiebbar festgelegt ist. Die Verschiebeplatte 3 ist in Richtung einer optischen Achse O der Kamera 2 im übrigen Stativkopf verschiebbar geführt, wobei der Befestigungsort der Kamera in der Verschiebeplatte 3 nicht verändert wird. Die jeweilige Lage der Verschiebeplatte 3 ist stufenlos durch eine Handhabe 5 und eine damit zusammenwirkende Mechanik arretierbar, um den Schwerpunkt S der Kamera 2 mit einer Neigeachse N des Stativkopfes auszurichten. Des Weiteren ist die Kamera 2 um eine Drehachse D drehbar und um die Neigeachse N schwenkbar, wobei die Neigestellung stufenlos durch eine Handhabe 5' feststellbar ist.

An der Oberseite der Verschiebeplatte 3 befindet sich eine Ausnehmung 6, in die die Kameraplatte 7 einsetzbar und durch die Befestigungseinrichtung 4 festlegbar ist. Dadurch kann die Kamera von der Verschiebeplatte gelöst werden, ohne dass die Schwerpunktausrichtung durch Verschieben der Verschiebeplatte geändert wird.

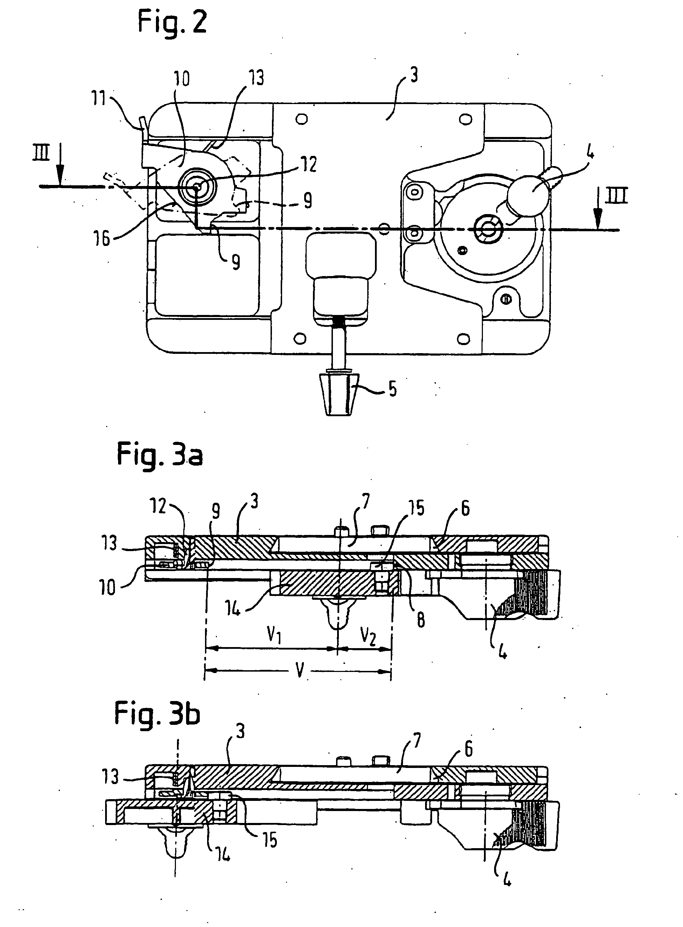

Bedingt durch die Befestigungseinrichtung 4 ist das Vorhandensein eines Anschlags 8 bzw. einer Bewegungsbegrenzung für die Verschiebeplatte 3 in einer Richtung, hier nach vorne, wenn man die Ausrichtung der Kamera mit seinem Objektiv als Bezug nimmt erforderlich. In der entgegengesetzten Richtung befindet sich ein Freianschlag 9, der Bestandteil eines Hebels 10 ist, der mittels einer Handhabe 11 betätigt werden kann. Der Hebel ist um eine Achse 12 schwenkbar, und zwar gegen die Wirkung einer Feder 13. In der in Fig. 2 dargestellten Darstellung mit ausgezogenen Linien befindet sich der Hebel 10 zusammen mit dem Freianschlag 9 in der Anschlagstellung und in strichpunktierten Linien in der Freistellung, wobei die Feder 13 beim Loslassen der Handhabe 11 den Hebel 10 und den Freianschlag 9 in die Anschlagstellung zurück bringt.

Die Verschiebeplatte 3 ist gegenüber einem Festteil 14 verschiebbar, wobei in Fig. 3a der Gesamtverschiebeweg V dargestellt ist, sowie die Verschiebeteilwege V₁ und V₂. Wegen des Vorhandenseins der Befestigungseinrichtung 4 und der damit verbundenen Verschiebebegrenzung, ist der Teilverschiebeweg V₂ kürzer als der Teilverschiebeweg V₁. Beide Anschläge schlagen an einem Gegenanschlag 15 an. Die beiden Extremstellungen sind in Fig. 3a und 3b dargestellt, wobei allerdings der Festteil 14 aus Gründen der Darstellung auf einem Blatt versetzt dargestellt ist.

Der Ausdruck "Freianschlag" wurde für den Anschlag 9 verwendet, weil er die Anschlagposition frei geben kann. In der in Fig. 2 strichpunktiert dargestellten Freigabestellung kann die Verschiebeplatte 3 ohne Behinderung durch den Gegenanschlag 15 vollständig abgenommen werden. Wenn dann die Verschiebeplatte umgekehrt wieder aufgesetzt wird, so steht der lange Verschiebeweg V₁ in der anderen Richtung zur Verfügung, kann also für beide Richtungen genutzt werden, wenn Kameras mit einem größeren Unterschied an Schwerpunktlagen auf dem Stativ zum Einsatz kommen sollen. Damit beim Aufschieben die Handhabe 11 nicht betätigt werden muss, ist der Hebel 10 mit einer schrägen Anstellfläche 16 versehen, an dem beim Aufschieben der Verschiebeplatte 3 der Gegenanschlag 15 anschlägt und den Hebel 10 gegen die Federkraft schwenkt, bis dann der Hebel mit dem Freianschlag 9 zurückschnellen kann, wenn der Gegenanschlag 15 diese Stelle passiert hat.

Die Kraft der Feder sowie der Weg, den der Freianschlag 9 zurücklegen muss, bis er den Bewegungsweg des Gegenanschlags 15 verlassen hat, können so variabel eingestellt werden, dass möglichst eine unbeabsichtigte Freigabe des Freianschlages 9 verhindert ist. Dies wird auch dadurch erreicht, dass die Handhabe 11 möglichst dicht an der Verschiebeplatte 3 anliegt, so dass sie nicht zu viel Angriffsfläche bietet.

Somit kann das System aus Kameraplatte und Verschiebeplatte zusammen mit der Befestigungseinrichtung, vorzugsweise an der der Kameraoptik entgegengesetzten Seite, beibehalten werden und trotzdem erreicht werden, dass auch dann der lange Verschiebeweg V₁ benutzt werden kann, wenn ein leichteres Objektiv verwendet wird und möglicherweise an der Rückseite der Kamera Akkumulatoren angebracht sind, die den Schwerpunkt nach hinten versetzen.

Dadurch ist ein einfaches Um- bzw. Nachrüsten des bestehenden Systems möglich.

## Patentansprüche

1. Kamerastativkopf mit einer Verschiebeplatte (3), welche Verschiebeplatte (3) am Stativkopf (1) begrenzt zwischen zwei Anschlägen (8, 9) in Verbindung mit mindestens einem Gegenanschlag (15) verschiebbar geführt und innerhalb des Gesamtverschiebebereiches (V) vorzugsweise stufenlos arretierbar (5) ist, wobei die Verschiebeplatte (3) vom Stativkopf (1) dadurch ohne Benutzung eines Werkzeuges lösbar und in Richtung der optischen Achse (O) einer anzubringenden Kamera (2) in umgekehrter Ausrichtung wieder anbringbar ist, und dass hierzu zumindest einer der Anschläge für die Verschiebebegrenzung als Freianschlag (9) für eine Bewegung aus einer Anschlagstellung in eine Freigabestellung und zurück aus dem Bewegungsweg mit dem Gegenanschlag (15) bringbar ist, **dadurch gekennzeichnet, dass** ausgehend von Zentrum (N) des Stativkopfes (1) Teilverschiebelängenbereiche (V₁, V₂) unterschiedlich Lang sind, und dass eine Kameraplatte (7) durch eine die Verschiebbarkeit begrenzende Befestigunseinrichtung (4) lösbar an der Verschiebeplatte (3) befestigt ist.

2. Kamerastativkopf nach Anspruch 1, **dadurch gekennzeichnet, dass** der Freianschlag (9) derjenige ist, der von der die Verschiebung der Verschiebeplatte (3) begrenzenden Befestigungseinrichtung (4) entfernt angeordnet ist.

3. Kamerastativkopf nach Anspruch 1, **dadurch gekennzeichnet, dass** der Gegenanschlag (15) als Freianschlag ausgeführt ist und hierzu seitlich verschiebbar oder versenkbar angeordnet ist.

4. Kamerastativkopf nach einem der Ansprüche 1 bis 3, **dadurch gekennzeichnet, dass** der Freianschlag (9) Teil eines handbetätigbaren Hebels (10) ist.

5. Kamerastativkopf nach einem der Ansprüche 1 bis 3, **dadurch gekennzeichnet, dass** der Freianschlag (9) Teil einer handbetätigbaren Druckstange ist.

6. Kamerastativkopf nach einem der Ansprüche 1 bis 3, **dadurch gekennzeichnet, dass** der Freianschlag (9) Teil einer handbetätigbaren Zugstange ist.

7. Kamerastativkopf nach einem der Ansprüche 4 bis 6, **dadurch gekennzeichnet, dass** der Hebel (10), die Druckstange und die Zugstange derart federbeaufschlagt (Feder 11) sind, dass der Freianschlag (9) in die Anschlagstellung gedrückt ist.

8. Kamerastativkopf nach einem der Ansprüche 4 bis 7, **dadurch gekennzeichnet, dass** die Federkraft so eingestellt ist, dass eine unbeabsichtigte Betätigung erschwert ist.

9. Kamerastativkopf nach einem der Ansprüche 4 bis 8, **dadurch gekennzeichnet, dass** der Betätigungsweg für den Freianschlag (9) so groß eingestellt ist, dass eine unbeabsichtigte Betätigung erschwert ist.

10. Kamerastativkopf nach Anspruch 4 bis 9, **dadurch gekennzeichnet, dass** eine Handhabe (11) für den Hebel (10), die Druckstange und die Zugstange zugänglich, aber geschützt an der Verschiebeplatte (3) angebracht ist.

11. Kamerastativkopf nach einem der Ansprüche 1 bis 10, **dadurch gekennzeichnet, dass** der Freianschlag (9) an der Verschiebeplatte (3) und der Gegenanschlag an einem Festteil (14) des Stativkopfes angebracht ist.

12. Kamerastativkopf nach einem der Ansprüche 1 bis 11, **dadurch gekennzeichnet, dass** beide Anschläge (8, 9) an der Verschiebeplatte (3) und ein Gegenanschlag (15) am Festteil (14) des Stativkopfes angebracht sind oder umgekehrt.

13. Kamerastativkopf nach einem der Ansprüche 1 bis 11, **dadurch gekennzeichnet, dass** der Freianschlag (9) eine Anstellfläche (16) aufweist, die beim Auftreffen des Freianschlages (9) beim Einschieben der Verschiebeplatte (3) in die Führung auf den Gegenanschlag (15) ein Nachgeben des Hebels (10), der Druckstange und der Zugstange gegen die Federkraft verursacht, so dass der Freianschlag automatisch ohne Betätigung desselben hinter den Gegenanschlag (15) in die Anschlagstellung bewegbar ist.

## Claims

1. Camera tripod head having a sliding plate (3), which sliding plate (3) is guided slidably on the tripod head (1) to a limited extent between two stops (8, 9) in conjunction with at least one counterstop (15) and can be locked (5), preferably infinitely invariably, within the overall sliding range (V), wherein the sliding plate (3) is therefore releasable from the tripod head (1) without using a tool and can be remounted in reverse orientation in the direction of the optical axis (O) of a camera (2) to be mounted, and for this purpose at least one of the stops for limiting sliding can be moved as a free stop (9) out of the path of movement with the counterstop (15) for a movement out of a stop position into a release position and back, **characterised in that**, starting from the centre (W) of the tripod head (1), partial sliding length ranges (V₁, V₂) are of different length, and **in that** a camera plate (7) is releasably fastened to the sliding plate (3) by a fastening device (4) which limits the sliding capacity.

2. Camera tripod head according to claim 1, **characterised in that** the free stop (9) is the one which is arranged remote from the fastening device (4) which limits the sliding of the sliding plate (3).

3. Camera tripod head according to claim 1, **characterised in that** the counterstop (15) is designed as a free stop and for this purpose is mounted laterally so as to be slidable or lowerable.

4. Camera tripod head according to any of claims 1 to 3, **characterised in that** the free stop (9) forms part of a manually operated lever (10).

5. Camera tripod head according to any of claims 1 to 3, **characterised in that** the free stop (9) forms part of a manually operated push rod.

6. Camera tripod head according to any of claims 1 to 3, **characterised in that** the free stop (9) forms part of a manually operated pull rod.

7. Camera tripod head according to any of claims 4 to 6, **characterised in that** the lever (10), the push rod and the pull rod are spring loaded (spring 11) in such a way that the free stop (9) is pushed into the stop position.

8. Camera tripod head according to any of claims 4 to 7, **characterised in that** the spring force is adjusted such that accidental actuation is made difficult.

9. Camera tripod head according to any of claims 4 to 8, **characterised in that** the path of actuation for the free stop (9) is set so long that accidental actuation is made difficult.

10. Camera tripod head according to claims 4 to 9, **characterised in that** a handle (11) for the lever (10), the push rod and the pull rod is mounted on the sliding plate (3) so as to be accessible, but protected.

11. Camera tripod head according to any of claims 1 to 10, **characterised in that** the free stop (9) is mounted on the sliding plate (3) and the counterstop is mounted on a fixed part (14) of the tripod head.

12. Camera tripod head according to any of claims 1 to 11, **characterised in that** both stops (8, 9) are mounted on the sliding plate (3) and a counterstop (15) is mounted on the fixed part (14) of the tripod head, or vice versa.

13. Camera tripod head according to any of claims 1 to 11, **characterised in that** the free stop (9) has a pitching surface (16) which, on impingement of the free stop (9) on the counterstop (15) when the sliding plate (3) is inserted in the guide, causes yielding of the lever (10), the push rod and the pull rod against the spring force, so that the free stop is movable into the stop position behind the counterstop (15) automatically without actuation thereof.

## Revendications

1. Tête de trépied d'appareil photographique, avec une plaque mobile (3), ladite plaque mobile (3) étant guidée de manière déplaçable sur la tête de trépied (1), de manière limitée entre deux butées (8, 9) en liaison avec au moins une contre-butée (15) et étant susceptible d'être bloquée (5), de préférence de manière continue, dans les limites de la plage globale de déplacement (V), la plaque mobile (3) étant susceptible d'être désolidarisée de la tête de trépied (1), de ce fait sans utilisation d'un outil, et susceptible d'être remontée selon une orientation inversée, en direction de l'axe optique (O) d'un appareil photographique (2) à monter, et en ce que, à cette fin, au moins l'une des butées pour la limitation de déplacement, en tant que butée libre (9), pour un déplacement d'une position en butée en une position de libération et retour, est susceptible d'être placée hors de la course de déplacement avec la contre-butée (15), **caractérisée en ce que**, en partant du centre (N) de la tête de trépied (1), des zones de longueur de déplacement partiel (V1, V2) sont de longueur différente, et **en ce qu'**une plaque d'appareil photographique (7) est fixée de manière désolidarisable sur la plaque mobile (3), au moyen d'un dispositif de fixation (4) limitant la mobilité en déplacement.

2. Tête de trépied d'appareil photographique selon la revendication 1, **caractérisée en ce que** la butée libre (9) est celle disposée loin du dispositif de fixation (4) limitant le déplacement de la plaque mobile (3).

3. Tête de trépied d'appareil photographique selon la revendication 1, **caractérisée en ce que** la contre-butée (15) est réalisée sous forme de butée libre et disposée de manière déplaçable, ou escamotable, latéralement par rapport à celle-ci.

4. Tête de trépied d'appareil photographique selon l'une des revendications 1 à 3, **caractérisée en ce que** la butée libre (9) fait partie d'un levier (10) actionnable manuellement.

5. Tête de trépied d'appareil photographique selon l'une des revendications 1 à 3, **caractérisée en ce que** la butée libre (9) fait partie d'une barre de pression actionnable manuellement.

6. Tête de trépied d'appareil photographique selon l'une des revendications 1 à 3, **caractérisée en ce que** la butée libre (9) fait partie d'une barre de traction actionnable manuellement.

7. Tête de trépied d'appareil photographique selon l'une des revendications 4 à 6, **caractérisée en ce que** le levier (10), la barre de pression et la barre de traction sont sollicitées élastiquement (ressort 11), de manière que la butée libre (9) soit pressée dans la position de mise en butée.

8. Tête de trépied d'appareil photographique selon l'une des revendications 4 à 7, **caractérisée en ce que** la force élastique est réglée de manière qu'un actionnement intempestif soit rendu difficile.

9. Tête de trépied d'appareil photographique selon l'une des revendications 4 à 8, **caractérisée en ce que** la course d'actionnement pour la butée libre (9) est réglée à une valeur si grande qu'un actionnement intempestif est rendu difficile.

10. Tête de trépied d'appareil photographique selon les revendications 4 à 9, **caractérisée en ce qu'**une manette (11) pour le levier (10), la barre de pression et la barre de traction, est montée sur la plaque mobile (3) de manière à être accessible, mais cependant protégée.

11. Tête de trépied d'appareil photographique selon l'une des revendications 1 à 10, **caractérisée en ce que** la butée libre (9) est montée sur la plaque mobile (3), et la contre-butée est montée sur une partie fixe (14) de la tête de trépied.

12. Tête de trépied d'appareil photographique selon l'une des revendications 1 à 11, **caractérisée en ce que** les deux butées (8, 9) sont montées sur la plaque mobile (3) et une contre-butée (15) est montée sur la partie fixe (14) de la tête de trépied, ou inversement.

13. Tête de trépied d'appareil photographique selon l'une des revendications 1 à 11, **caractérisée en ce que** la butée libre (9) présente une face d'attaque (16) qui, lors de l'impact de la butée libre (9) sur la contre-butée (15), lors de l'insertion de la plaque mobile (3) dans le guidage, provoque un effacement du levier (10), de la barre de pression et de la barre de traction à l'encontre de la force élastique, de manière que la butée libre soit déplaçable automatiquement, sans actionnement de celle-ci derrière la contre-butée (15), pour être placée dans la position de mise en butée.
